**Europäisches Patentamt**

**European Patent Office**

**Office européen des brevets**

(11) Veröffentlichungsnummer: **0 114 665**
**B1**

(12) **EUROPÄISCHE PATENTSCHRIFT**

(45) Veröffentlichungstag der Patentschrift:
**06.04.88**

(21) Anmeldenummer: **84100528.3**

(22) Anmeldetag: **19.01.84**

(51) Int. Cl.⁴: **A 23 N 12/00,** B 07 B 1/14,
B 07 B 1/22

(54) Vorrichtung (Krautfänger) zum Aussondern von faserigen Gegenständen aus einem Zuckerrüben aufweisenden Gemisch.

(30) Priorität: **20.01.83 DE 3301766**

(43) Veröffentlichungstag der Anmeldung:
**01.08.84 Patentblatt 84/31**

(45) Bekanntmachung des Hinweises auf die Patenterteilung:
**06.04.88 Patentblatt 88/14**

(84) Benannte Vertragsstaaten:
**AT BE DE FR GB IT NL**

(56) Entgegenhaltungen:
**DE-B-1 119 035**
**FR-A-1 228 425**
**FR-A-2 411 575**
**US-A-2 624 458**
**US-A-2 997 086**

**Zeitschrift "Zucker Industrie", Sonderdruck aus Band 104 (1979), Seiten 589-592**

(73) Patentinhaber: **Gerlach, Hildburg, In den Wiesen 8, D-2730 Zeven (DE)**

(72) Erfinder: **Gerlach, Günter, verstorben, (DE)**

(74) Vertreter: **Bolte, Erich, Dipl.- Ing., c/o Meissner, Bolte & Partner Patentanwälte Hollerallee 73, D-2800 Bremen 1 (DE)**

## Beschreibung

Die Erfindung betrifft eine Vorrichtung (Krautfänger) zum Aussondern von faserigen Gegenständen, insbesondere Kraut od. dgl., aus einem Zuckerrüben aufweisenden Gemisch, mit Gruppen aus zwei in gegensinnigen Drehrichtungen antreibbaren Walzen, die achsparallel mit aneinanderliegenden bzw. geringfügigen Abstand aufweisenden Walzenmänteln angeordnet sind zum Ausscheiden des Krauts od. dgl. zwischen den Walzen hindurch.

Die Krautfänger der Erfindung dienen vorzugsweise zum Einsatz in der zuckerverarbeitenden Industrie. Die dort angelieferten Zuckerrüben sind üblicherweise mit Kraut, Stroh, Steinen, Holz od. dgl. vermischt. Aus diesem Grunde müssen die Zuckerrüben vor ihrer Verarbeitung ausgesondert werden, um Beschädigungen an den Maschinen zur Zuckerrübenaufbereitung, beispielsweise an Zerkleinerungsmaschinen, zu vermeiden und unerwünschte Verunreinigungen auszuschließen. Aus diesem Grunde werden für die Verarbeitung der Zuckerrüben ungeeignete, faserige Bestandteile wie Kraut, Stroh od. dgl. während des innerbetrieblichen Transports vor der eigentlichen Zuckerrübenverarbeitung von Krautfängern abgesondert.

Zu diesem Zweck ist bereits aus der US-A-2 997 086 eine Vorrichtung bekannt, die in einer geneigt zur Förderrichtung verlaufenden Ebene mehrere hintereinanderliegende Walzen aufweist. Die Walzen sind derart gruppiert, daß diese jeweils paarweise aneinanderliegen und sich dadurch gegensinnig drehen.

Diese bekannte Vorrichtung hat den Nachteil, daß sich Kraut um die einzelnen Walzen wickeln kann, das nur noch auf manuellem Wege entfernbar ist. Darüber hinaus besteht auch die Gefahr, daß zwischen den an der Oberseite der Vorrichtung zusammenlaufenden Walzen sich Steine o. ä. harte Gegenstände verklemmen können. In einem solchen Falle kann es zur Beschädigung oder gar zur Stillegung der Vorrichtung kommen.

Zur Vermeidung des letztgenannten Nachteils ist zwar schon in der DE-B-1 119 035 vorgeschlagen worden, bei einer Krautabscheidevorrichtung über dem Einzugsspalt jedes Walzenpaares aus aneinanderliegenden, gegensinnig angetriebenen Walzen parallel zu den Drehachsen derselben verlaufende Abweisstäbe anzuordnen. Dadurch soll verhindert werden, daß sich größere Gegenstände wie Steine, Kraut, Klumpen etc. zwischen den zusammenarbeitenden Walzen festklemmen.

Durch die Krautabscheidevorrichtung der DE-B-1 119 035 lassen sich jedoch Betriebsstörungen, die durch kleine Gegenstände hervorgerufen werden können, noch nicht zuverlässig vermeiden. Insbesondere sind die Abweisstäbe unwirksam gegen ein Herumwickeln einzelner Krautstränge bzw. -fasern um die einzelnen Walzen dieser bekannten Krautabscheidevorrichtung.

Aufgabe der Erfindung ist es daher, eine Krautfangvorrichtung vorzuschlagen, die einen in bezug auf Verstopfungen bzw. Verklemmungen der Walzen zuverlässigen Betrieb gestattet.

Zur Lösung dieser Aufgabe ist die erfindungsgemäße Vorrichtung dadurch gekennzeichnet, daß die Drehrichtungen der Walzen in Abhängigkeit von deren Antriebsmoment und/oder in (regelmäßigen) Zeitintervallen für eine bestimmte Dauer umkehrbar sind.

Die Drehrichtungsumkehr der zum Antrieb einzelner Gruppen dienenden Motoren kommt dann zum Tragen, wenn beispielsweise zwischen zwei Walzen sich ein harter Gegenstand (Steine od. dgl.) verfangen hat. Dann werden ein oder mehrere zwischen den Walzen eingeklemmte Gegenstände durch kurzfristigen entgegengesetzten Antrieb der Walzen zur Freigabe derselben zum Gemisch hin gefördert. Eine erneute Drehrichtungsumkehr der Walzen in die (Betriebs-)Drehrichtung erfolgt nach einem vorherbestimmten Zeitintervall automatisch.

Bei einer alternativen Ausführungsform der Erfindung kann die Drehrichtungsumkehr regelmäßig in bestimmten Zeitabständen erfolgen. Dadurch werden die Walzen von Zeit zu Zeit zwangsläufig gereinigt, wodurch vermieden wird, daß sich erst eine größere Menge von beispielsweise Kraut um die Walzen wickeln muß, bevor die Überlastsicherung der Vorrichtung anspricht.

Nach einem weiteren Vorschlag der Erfindung erfolgt der Antrieb der beiden Walzen einer Gruppe, indem jeweils eine Walze von außen, also beispielsweise von einem Motor, angetrieben wird und diese wiederum die zweite Walze antreibt. Bei aneinanderliegenden Walzenmänteln einer Gruppe erfolgt der Antrieb der zweiten Walze vorzugsweise durch Reibschluß. Sind zwei Walzen einer Gruppe mit geringfügigem Abstand voneinander angeordnet, dann erfolgt der Antrieb der zweiten Walze durch eine getriebliche Verbindung, beispielsweise eine Zahnradverbindung. Alternativ hierzu kann ein Reibrad-, Ketten- oder Keilriemenantrieb dienen. Einer solcher Antriebe kann auch zusätzlich zum Reibantrieb der Zylindermäntel bei aneinanderliegenden Walzen vorhanden sein. Durch einen auf diese Weise erfolgenden Antrieb der zweiten Walze einer Gruppe ist mit geringem antriebsseitigen Aufwand ein Synchronlauf der beiden zusammenwirkenden Walzen in entgegengesetzten Richtungen möglich.

Die Drehrichtung zweier Walzen einer Gruppe sind derart gewählt, daß die nebeneinanderliegenden Walzen an ihrer zum Gemisch gerichteten Oberseite zueinander laufen zu einer zwischen ihnen gebildeten Berührungslinie bzw. einem Spalt. Dadurch werden die faserigen Gegenstände des Gemisches zwischen den Walzen einer Gruppe hindurchgezogen, während die großen (sperrigen) Zuckerrüben sich über die Walzen hinweg bewegen, vorzugsweise in deren Längsrichtung. Das Gemisch wird auf diese Weise aufgetrennt in zwei Förderrichtungen, nämlich über die Walzen längs hinweg und annähernd quer zwischen den Walzen hindurch. Um zu verhindern, daß sich dabei besonders längeres Kraut um die Walze schlingt, ist an der dem Gemisch abgewandten (Unter-)Seite der Gruppe einer jeden Walze ein Abstreifer angeordnet.

Bei einer vorteilhaften Ausführungsform der Erfindung sind mehrere Reihen aus einer Mehrzahl von Gruppen hintereinander angeordnet, vorzugsweise kaskadenartig, d. h. zueinander höhenversetzt, und zwar in Förderrichtung tieferliegend. Die Anzahl der nebeneinanderliegenden Gruppen einer Reihe und die Anzahl der hintereinanderliegenden Reihen richtet sich nach der Durchsatzleistung der Vorrichtung. Durch die kaskadenartigen und/oder geneigt verlaufenden Drehachsen gleitet das Gemisch selbständig über die Walzen des Krautfängers hinweg.

Besonders wirkungsvoll arbeitet der erfindungsgemäße Krautfänger bei mit Abstand hintereinanderliegenden Reihen, wobei die Abstände zwischen den einzelnen Reihen durch Bleche mit darauf angeordneten Erhöhungen überbrückt sind. Ebenfalls sind auf einer vor den Reihen angeordneten Zuführrutsche Erhöhungen angebracht. Die Neigung der Bleche ist größer bemessen als die Neigung der Walzen, wodurch das Gemisch aufgelockert wird. Bei einem inhomogenen Gemisch und dabei vor allem bei auf den Zuckerrüben liegendem Kraut wird erreicht, daß letzteres zwischen den (unten liegenden) Zuckerrüben hindurchfällt und in Berührung mit den Walzenmänteln kommt.

Bei einer weiteren, vorteilhaften Ausführungsform der Erfindung sind die Gruppen zweier nebeneinanderliegender Walzen trommelförmig auf einer geschlossenen, kreisförmigen Bahn, insbesondere einer Kreisbahn angeordnet. Dabei können die Walzen mit ihren Stirnseiten im Umfangsbereich zweier mit Abstand voneinander angeordneter Speichenräder drehbar gelagert sein. Die Speichenräder mit den Walzen wiederum sind drehbar an einem (ortsfesten) Gestell befestigt. Durch drehenden Antrieb der Speichenräder bewegen sich die Walzen translatorisch auf einer durch die Speichenräder vorgegebenen Kreisbahn.

Zusätzlich sind die Walzen rotatorisch angetrieben. Dazu dient ein Reibradantrieb an einem einer Walze jeder Gruppe zugeordneten Reibrad und mindestens einem den Reibrädern zugeordneten Reibblech. Die mit den Speichenrädern auf der Kreisbahn derselben bewegten Walzen werden zusätzlich um ihre Drehachse gedreht durch Abwälzen der Reibräder auf den stillstehenden Reibblechen. Die durch das Reibrad angetriebene Walze einer Gruppe treibt die zweite Walze, die kein Reibrad aufweist, wiederum durch Reibschluß an den Walzenmänteln bzw. durch eine zusätzliche getriebliche Verbindung an.

Zweckmäßigerweise erfolgt der rotatorische Antrieb der Walzen während einer Umdrehung des Speichenrades nur teilweise und dabei in unterschiedlichen Richtungen. So ist annähernd im Bereich der unteren Hälfte der Kreisbahn des Speichenrades ein Reibblech den Reibrädern der Walzen von außen her zugeordnet, wodurch bei Drehung der Speichenräder im Uhrzeigersinn sich die Walzen in (Betriebs-)Drehrichtung drehen, zusätzlich zur translatorischen Bewegung auf der Kreisbahn. Weiterhin ist im oberen rechten Bereich der Kreisbahn ein weiteres Reibblech von innen her den Reibrädern der Walzen zugeordnet, wodurch ein zusätzlicher rotatorischer Antrieb der Walzen in entgegengesetzter Richtung zur (Betriebs-) Drehrichtung erfolgt bei fortwährender Bewegung der Speichenräder im Uhrzeigersinn. Durch die Drehrichtungsumkehr im oberen rechten Bereich der Kreisbahn lösen sich zwischen den Walzen festgeklemmte Gegenstände, die wieder auf die unteren, in (Betriebs-)Drehrichtung bewegten Walzen fallen. Das zweite, obere Reibblech verhindert demnach ein längerwährendes Blockieren der Walzen durch zwischen denselben festgeklemmte Gegenstände, indem durch die periodische Drehrichtungsumkehr der Walzen bei jeder Umdrehung auf ihrer Kreisbahn diese wieder freigesetzt werden.

In den Bereichen zwischen den Reibblechen erfolgt kein rotatorischer Antrieb der Walzen, indem in diesen Bereichen keine Reibbleche den Reibrädern zugeordnet sind. Der Antrieb der Walzen ist also auf diejenigen Umfangsbereiche des Krautfängers beschränkt, in denen eine wirksame Aussonderung des Krauts od. dgl. aus dem Gemisch bzw. eine Drehrichtungsumkehr vorgenommen werden soll.

Alternativ ist auch bei dieser Ausführungsform der erfindungsgemäßen Vorrichtung eine Drehrichtungsumkehr der Walzen in Abhängigkeit vom Antriebsmoment derselben durch eine elektrische Stromwächterschaltung möglich, die ggf. den zum Antrieb dienenden Motor der Vorrichtung umsteuert. In diesem Falle kann das zweite, obere Reibblech am Umfang der Speichenräder entfallen.

Zwei Ausführungsbeispiele der Erfindung werden nachfolgend anhand der Zeichnungen näher erläutert.

Es zeigen:

Fig. 1 eine schematische Seitenansicht einer Vorrichtung mit kaskadenartig angeordneten Walzen,

Fig. 2 eine teilweise Ansicht der Fig. 1 der Vorrichtung im Bereich der Walzen, in vergrößertem Maßstab,

Fig. 3 eine um 90° gedrehte Vorderansicht der Vorrichtung gemäß der fig. 2,

Fig. 4 einen Schaltplan einer von drei Elektromotoren angetriebenen Vorrichtung,

Fig. 5 einen Steuerungsplan der gemäß Fig. 4 geschalteten Elektromotoren der Vorrichtung,

Fig. 6 eine schematische Seitenansicht eines zweiten Ausführungsbeispiels einer Vorrichtung mit trommelartig angeordneten Walzen,

Fig. 7 eine teilweise Ansicht der Vorrichtung der Fig. 6 in vergrößertem Maßstab, und

Fig. 8 eine Vorderansicht der Vorrichtung im Schnitt VIII-VIII der Fig. 7.

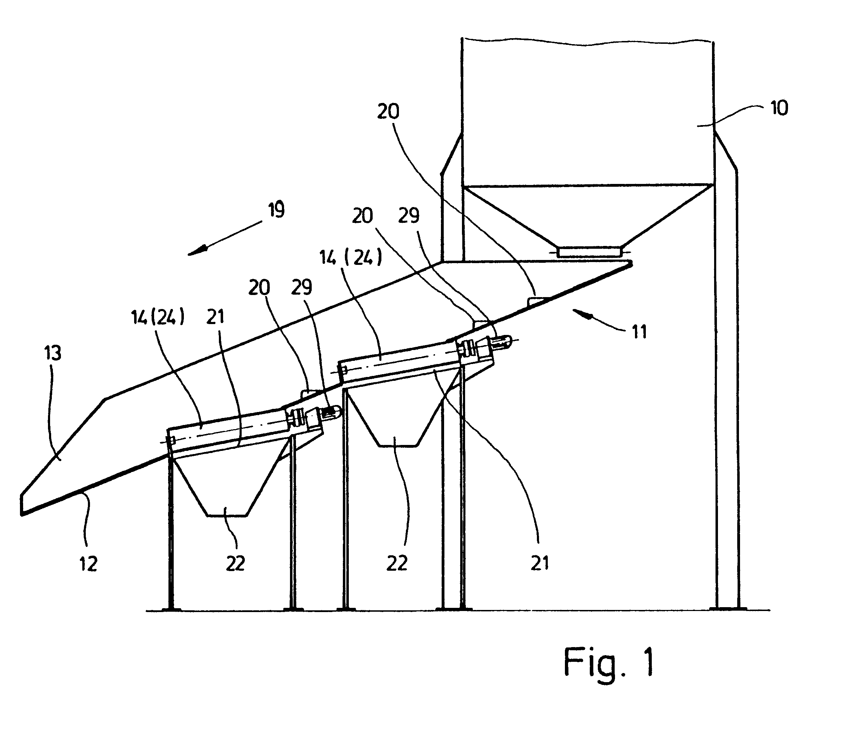

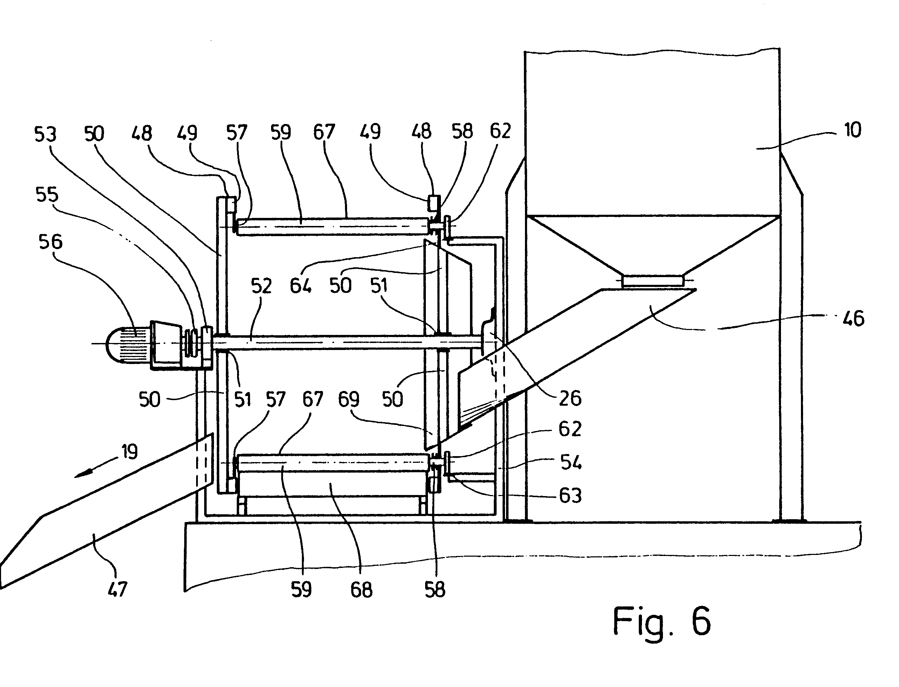

Die in Fig. 1 und 6 gezeigten Ausführungsbeispiele zeigen Krautfänger zum Einsatz im Trockenbereich einer Zuckerfabrik.

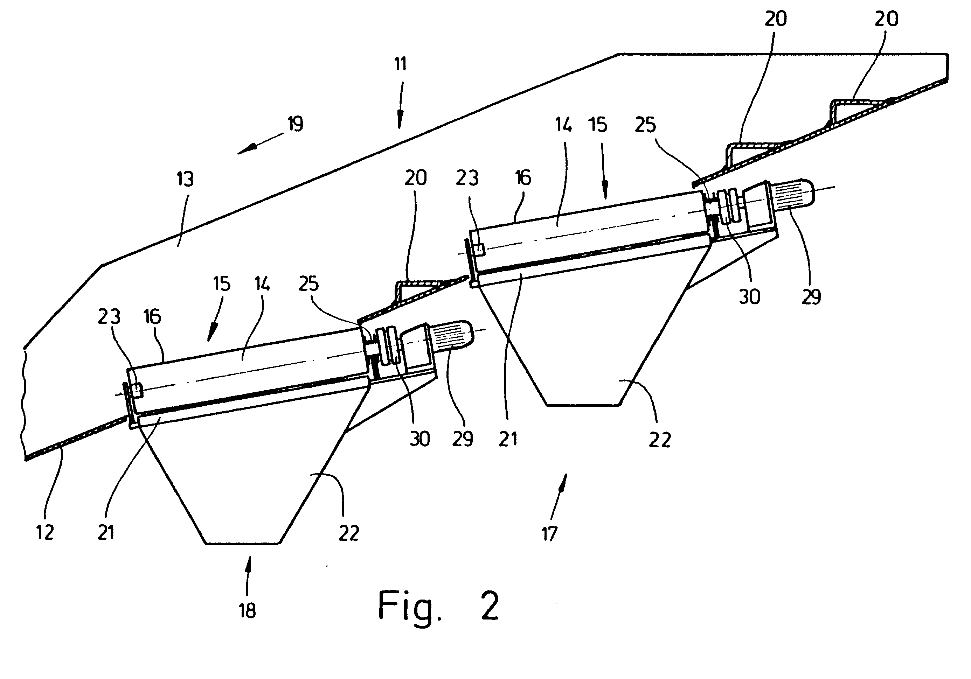

Die Fig. 1 bis 3 zeigen einen im Bereich einer Rutsche 11 angeordneten Krautfänger. Die geneigt angeordnete Rutsche 11 weist einen annähernd U-förmigen Querschnitt auf mit einem Boden 12, der seitlich durch zwei aufrechte Seitenwände begrenzt ist. Der Boden 12 der Rutsche 11 weist bereichsweise Öffnungen auf, in die eine Vielzahl von neben- und hintereinanderliegenden Walzen (14, 24) hineinragen.

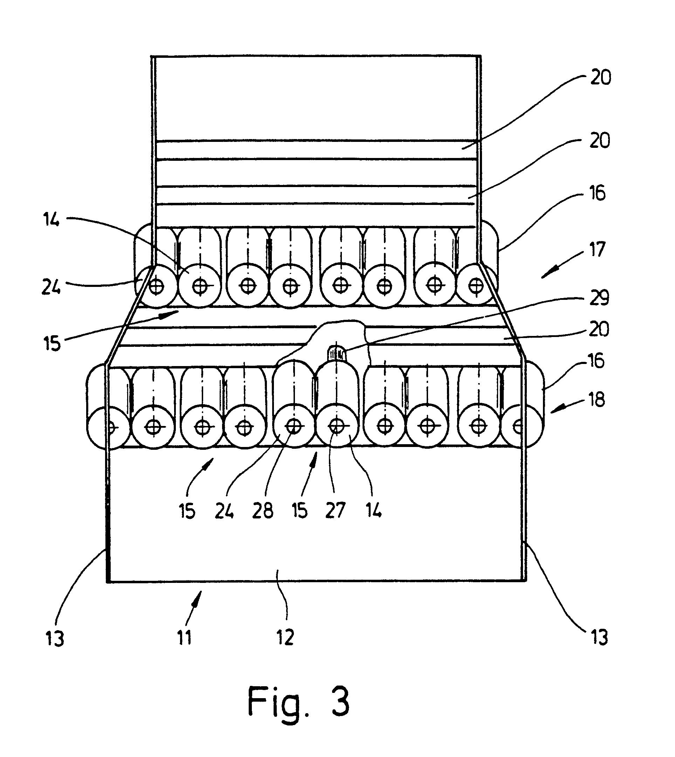

Wie aus Fig. 3 ersichtlich, sind jeweils zwei Walzen 14 und 24 zu einer Gruppe 15 achsparallel mit aneinanderliegenden Walzenmänteln 16 angeordnet. Wiederum mehrere in einer Ebene nebeneinanderliegende Gruppen 15 zweier Walzen 14 bzw. 24 bilden in diesem Ausführungsbeispiel zwei hintereinanderliegende Reihen 17 und 18. In beiden Reihen 17 bzw. 18 weisen die Walzen 14, 24 nebeneinanderliegender Gruppen 15 einen geringfügigen Abstand voneinander auf, so daß lediglich die Walzenmäntel 16 der beiden Walzen 14 und 24 einer jeden Gruppe 15 aneinanderliegen.

Die hintereinanderliegenden Reihen 17 und 18 weisen eine unterschiedliche Anzahl von Walzen 14, 24 bzw. Gruppen 15 auf, und zwar verfügt die in Förderrichtung 19 vorn liegende Reihe 18 hier über fünf Gruppen 15, während die dahinter liegende Reihe 17 nur vier Gruppen 15 aufweist.

Die Reihen 17 und 18 sind symmetrisch zu einer in Förderrichtung 19 verlaufenden Längsmittellinie des Krautfängers angeordnet. Dadurch verfügen die einzelnen Gruppen 15 der hintereinanderliegenden Reihen 17, 18 über einen Versatz, der in etwa den Durchmesser einer Walze 14 bzw. 24 aufweist.

Die in Längsrichtung der Rutsche 11 gerichteten Drehachsen der Walzen 14, 24 sind in Förderrichtung 19 geneigt. Ebenso ist die Rutsche 11 in Förderrichtung 19 geneigt, jedoch ist die Neigung derselben hier größer als die der Walzen 14, 24.

Die Reihen 17, 18 weisen in Förderrichtung 19 einen Abstand voneinander auf. In diesem Bereich befindet sich auf dem Boden 12 der Rutsche 11 eine über die gesamte Breite des Bodens 12 durchgehende Erhöhung 20. Zwei weitere Erhöhungen 20 sind am oberen Ende der Rutsche 11 auf dem Boden 12 derselben angeordnet. Die Erhöhungen 20 sind in diesem Ausführungsbeispiel mit dreieckförmigem Querschnitt ausgebildet und weisen ungleich lange Katheten auf. Dabei ist das Längenverhältnis der Katheten derart gewählt, daß die (längere) Kathete auf dem geneigten Boden 12 der Rutsche 11 annähernd in einer Horizontalen liegt. Durch diese Erhöhungen 20, insbesondere durch die beiden am oberen Ende der Rutsche 11 angeordneten Erhöhungen 20, wird das Gemisch aufgelockert, um auf die Walzen 14 bzw. 24 des Krautfängers zu gelangen.

Unter einer jeden Walze 14, 24 ist ein plattenförmiger Abstreifer 21 aufrecht angeordnet. Der eine rechteckförmige Grundfläche aufweisende Abstreifer 21 verläuft dabei mit seiner längeren Kante über die gesamte Länge der Walzen 14, 24. Der Abstand des Abstreifers 21 von den Walzen 14 bzw. 24 ist so gewählt, daß die obere, lange Kante desselben einerseits keinen Kontakt zu den Walzenmänteln 16 aufweist, andererseits aber ein Hindurchtreten der von den Walzen 14, 24 ausgeschiedenen faserigen Bestandteile des Gemisches zwischen Abstreifer 21 und Walzenmänteln 16 verhindert, damit sich kein Kraut od. dgl. um die Walzenmäntel 16 herumwickeln kann.

Unterhalb der Walzen 14, 24 der Reihen 17 und 18 ist jeweils ein Trichter 22 zur haufenweisen Abfuhr des von den Krautfängern ausgesonderten Krauts od. dgl. angebracht.

Die Walzen 14 bzw. 24 einer jeden Gruppe 15 sind in diesem Ausführungsbeispiel an ihren gegenüberliegenden Stirnseiten drehbar gelagert durch Lager 23 und 25, die vorzugsweise als Wälzlager ausgebildet sind.

Die Walzen 14 und 24 bestehen aus einer von den Lagern 23 bzw. 25 getragenen Welle 27 bzw. Achse 28, die von durchgehenden Walzenmänteln 16 umgeben sind. Letztere sind unverschieblich und unverdrehbar auf den Wellen 27 bzw. den Achsen 28 befestigt. Hergestellt sind die Walzenmäntel 16 aus einem elastischen Material, nämlich Gummi. Der (Außen-)Durchmesser der Walzen 14 und 24 beträgt hier ungefähr 130 mm.

Zum Antrieb des Krautfängers ist in diesem Ausführungsbeispiel jeder Gruppe 15 ein eigener Antrieb zugeordnet. Dieser besteht aus einem Elektromotor 29, der über eine elastische Kupplung 30 mit jeweils einer Walze 14 einer jeden Gruppe 15 an der oberen Stirnseite, nämlich im Bereich des Lagers 25, verbunden ist. Der Antrieb der zweiten Walze 24 einer jeden Gruppe 15 erfolgt durch Reibschluß an den aneinanderliegenden Walzenmänteln 16. Dadurch erfahren in jeder Gruppe 15 die Walzen 14, 24 eine synchrone, entgegengesetzte Drehung. Die Drehfrequenz der Walzen 14 und 24 beträgt ungefähr 60 1/min. Diese Drehfrequenz entsteht durch Verwendung eines als Getriebemotor ausgebildeten Elektromotors 29, dessen Nenndrehfrequenz entsprechend untersetzt ist.

Durch eine elektrische Steuerung erfolgt bei durch einen Stein od. dgl. unverdrehbar gegeneinander verkeilten Walzen 14 bzw. 24 einer Gruppe 15 eine Drehrichtungsumkehr der Elektromotoren 29. Diese erfolgt in Abhängigkeit von der Stromaufnahme der Elektromotoren 29 über einen Stromwächter in Form eines Stromrelais 31, welches über die elektrische Steuerung zwei Wendeschütze 32 und 33 zur Umsteuerung der Elektromotoren 29 steuert.

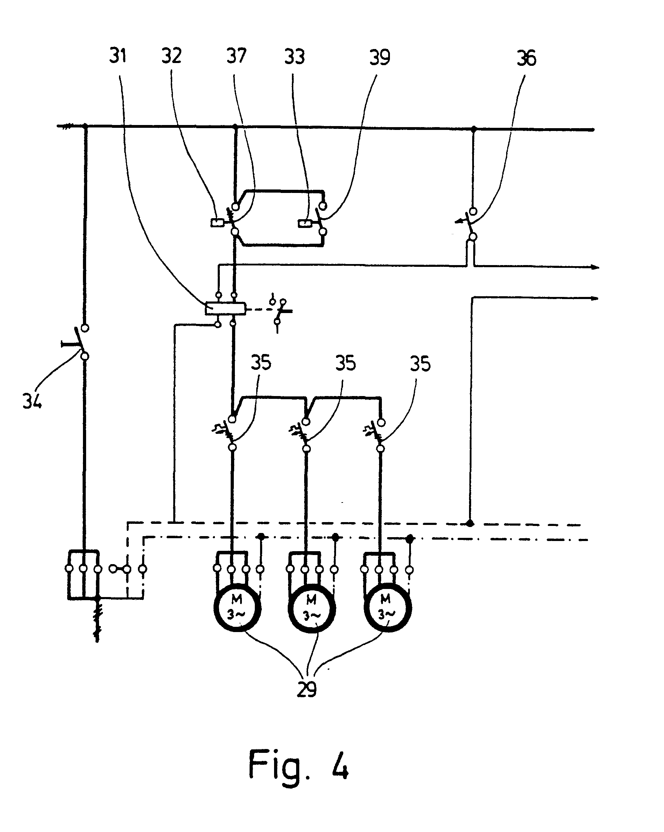

Die Fig. 4 zeigt einen Schaltplan für drei Elektromotoren 29. Diese werden von einem Drehstromnetz versorgt. Direkt hinter der Einspeisung liegt ein Hauptschalter 34 zur Abschaltung der gesamten Anlage. Dahinter befinden sich parallelgeschaltet die Wendeschütze 32 bzw. 33, von denen alternativ nur einer eine Verbindung zu den Elektromotoren 29 herstellt, je nachdem ob diese vorwärts, also in (Betriebs-)Drehrichtung, oder rückwärts zum Beseitigen von Störungen laufen sollen. Hinter den Wendeschützen 32 und 33 liegt das Stromrelais 31, über das der gesamte zum Antrieb der drei Elektromotoren 29 dienende Strom fließt. Dieser teilt sich auf die drei parallelgeschalteten Elektromotoren 29 auf, denen jeweils eine Motorschutzschalter 35 vorgeordnet ist.

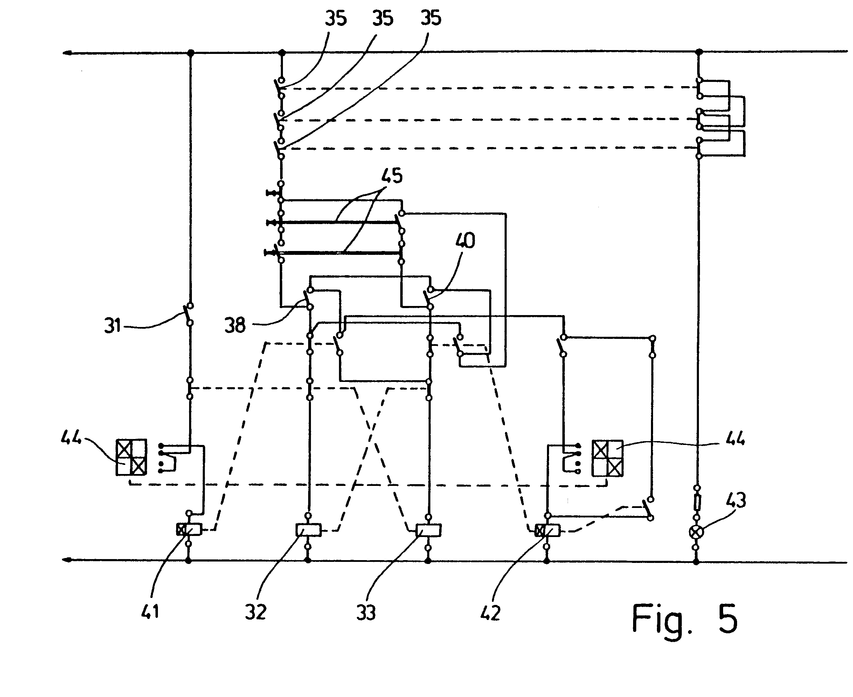

Die Fig. 5 zeigt die elektrische Steuerung der Wendeschütze 32, 33 in Abhängigkeit vom Stromfluß über das Stromrelais 31. Die Steuerung wird mit einphasigem Wechselstrom versorgt und ist über die der Fig. 4 dargestellte Steuersicherung 36 geschützt. Beim normalen Betrieb der Krautfänger sind durch den Wendeschütz 32 die ihm zugeordneten Schalter 37 und 38 geschlossen. Bei einem bestimmten Stromanstieg im Stromrelais 31 werden nach einem vorherbestimmbaren Zeitintervall die Wendeschütze 32 und 33 zeitverzögert betätigt. Diese Zeitverzögerung wird durch ein dem Stromrelais 31 zugeordnetes Zeitrelais 41 bewirkt. Letzteres soll verhindern, daß bereits bei kleinen Stromstößen in der Anlage eine Drehrichtungsumkehr der Elektromotoren 29 erfolgt, beispielsweise durch einen erhöhten Anlaufstrom.

Somit wird bei einem länger währenden Stromanstieg durch das Stromrelais 31 über das Zeitrelais 41 zunächst der Wendeschütz 32 und dann der Wendeschütz 33 betätigt, indem die Schalter 37, 38 öffnen, während die Schalter 39, 40 des Wendeschützes 33 schließen. Gleichzeitig wird ein zweites Zeitrelais 42 betätigt. Dieses hält über ein vorher bestimmbares Zeitintervall die Rückwärts-Drehrichtung der Motoren 29 aufrecht. Nach einer gewissen Zeit sorgt dann das Zeitrelais 42 wieder für eine Umsteuerung der Elektromotoren 29 in die (Betriebs-)Drehrichtung. Dazu betätigt das Zeitrelais 42 nacheinander die Wendeschütze 33 und 32.

Bei zu starker Überlast oder im Falle daß ein Blockieren der Walzen 14 bzw. 24 durch ein Reversieren der Elektromotoren 29 nicht behebbar ist, spricht einer der Motorschutzschalter 35 an. Dadurch wird der ihm zugeordnete Elektromotor 29 stillgesetzt. Diese Störung wird durch einen Leuchtmelder 43 signalisiert.

Ein Hand-Automatikschalter 44 ermöglicht ein Umschalten der Steuerung auf Handbetrieb zur manuellen Bedienung der Anlage. Durch Betätigung eines der beiden Taster 45 ist dann je nach Bedarf ein handgeregelter Vor- und Rücklauf der Elektromotoren 29 möglich. Auf diese Weise kann der Krautfänger zu Kontroll- bzw. Reparaturzwecken oder zur Behebung schwerwiegender Blockierungen gefahren werden.

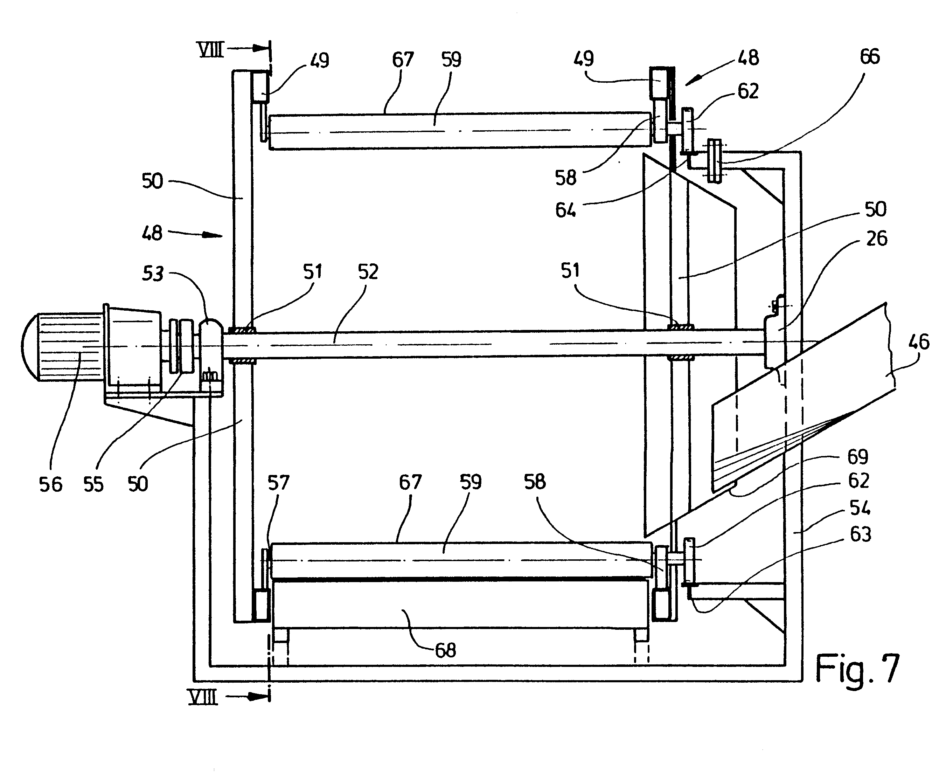

Ein zweites Ausführungsbeispiel zeigen die Fig. 6 bis 8. Auch hier ist der Krautfänger derart angeordnet, daß über eine Zuführrutsche 46 das Gemisch dem Krautfänger zu- und über eine Abführrutsche 47 abführbar ist.

Bei diesem Ausführungsbeispiel sind ebenfalls zwei Walzen 59, 60 zu Gruppen 61 zusammenliegend angeordnet, und zwar trommelförmig. Zu diesem Zweck sind sie mit ihren Stirnseiten am Umfang zweier mit Abstand voneinander angeordneter Speichenräder 48 drehbar gelagert, nämlich an gegenüberliegenden, äußeren Ringen 49. Die Ringe 49 der Speichenräder 48 sind durch radial gerichtete Speichen 50 mit mittleren Naben 51 verbunden. Mit diesen Naben 51 sind die Speichenräder 48 unverdrehbar auf einer gemeinsamen Welle 52 gelagert. Diese wiederum ist in ihren Endbereichen durch zwei Lager 53 bzw. 26 drehbar an einem (ortsfesten) Gerüst 54 angeordnet.

Durch eine elastische Kupplung 55 ist die Welle 52 mit einem Elektromotor 56 verbunden. Damit sind die Speichenräder 48 mit den Walzen 59 bzw. 60 auf einer Kreisbahn translatorisch bewegbar.

An den Speichenrädern 48 sind die Walzen 59, 60 um ihre Längsachsen drehbar gelagert durch stirnseitig angeordnete Lager 57 bzw. 58, die mit den Ringen 49 verbunden sind. Die Lager 57, 58 sind vorzugsweise als Wälzlager ausgebildet.

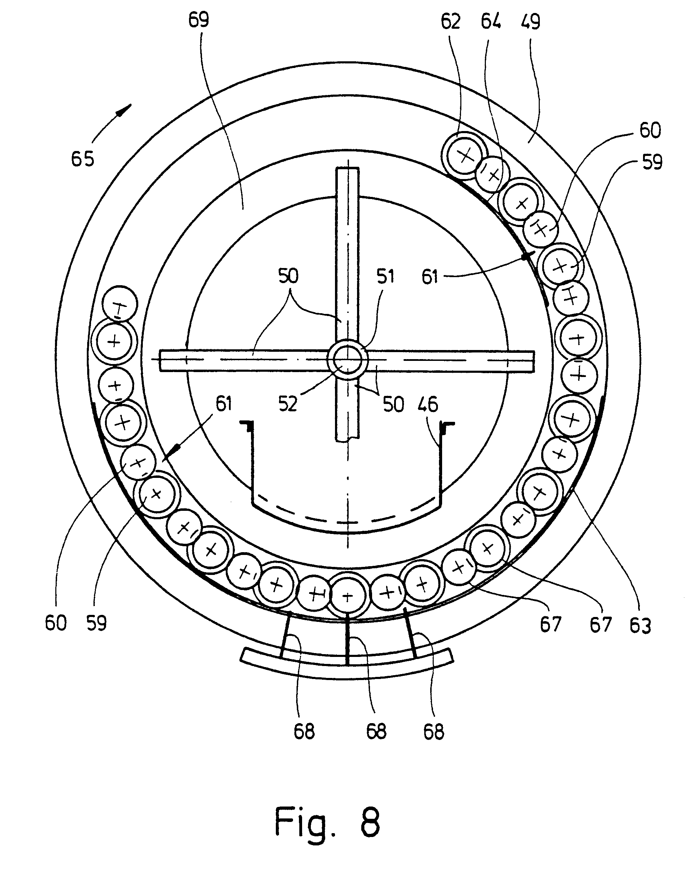

Durch einen Reibradantrieb sind die Walzen 59 und 60 zusätzlich zur translatorischen Bewegung auf der Kreisbahn der Speichenräder 48 um ihre Drehachsen rotatorisch antreibbar. Dazu weist eine Walze 59 jeder Gruppe 61 ein dem Lager 58 zugeordnetes Reibrad 62 auf. Diese wälzen sich während der Drehung der Speichenräder 48 auf an der Seite der Zuführrutsche 46 am Gerüst 54 fest angeordneten Reibblechen 63 und 64 ab. Die Zuordnung der Reibbleche 63, 64 zu den einzelnen Reibrädern 62 und die Verteilung derselben auf die Kreisbahn der Speichenräder 48 geht anschaulich aus der Fig. 8 hervor. Hier ist ein Reibblech 63 über annähernd die untere Hälfte der Kreisbahn der Speichenräder 48 verlaufend von außen her den Reibrädern 62 der Walzen 59 zugeordnet. Beim Antrieb der Welle 52 in Drehrichtung 65 findet durch das Reibblech 63 ein rotatorischer Antrieb der Walzen 59 und 60 in (Betriebs-)Drehrichtung statt, also mit zueinander gerichteten Drehrichtungen der Walzen 59, 60 der im Wirkbereich des Reibblechs 63 angetriebenen Gruppen 61. Damit findet ein Aussondern des Krautes od dgl. aus einem auf die unten befindlichen Walzen 59, 60 aufgegebenen Gemisch statt. Im oberen, rechten Viertelkreisbereich der Kreisbahn ist das zweite Reibblech 64 angeordnet. Dieses stützt sich jedoch von innen her gegen die Reibräder 62 der Walzen 59 ab. Damit werden die vom Reibblech 64 angetriebenen Walzen 59 und 60 bei ebenfalls in Drehrichtung 65 bewegter Welle 52 in entgegengesetzter Richtung zur (Betriebs-) Drehrichtung bewegt. Die Walzen 59 bzw. 60 werden somit periodisch bei jeder Umdrehung der Speichenräder 48 reversiert zum Lösen eventueller zwischen zwei Walzen 59, 60 der vom Reibblech 64 angetriebenen Gruppen 61 festsitzender Gegenstände. Die auf diese Weise gelösten Gegenstände wie z. B. Steine od. dgl. können dadurch auf die unten liegenden Walzen 59, 60 herunterfallen.

Das Reibblech 64 ist über eine Flanschverbindung 66 mit dem Gerüst 54 verschieblich verbunden, um geringfügige Verschiebungen des Reibblechs 64 auf der Kreisbahn vornehmen zu können. Dadurch ist die Abwurfstelle der durch das Reversieren der Walzen 59 bzw. 60 frei werdenden Gegenstände einstellbar, derart, daß diese neben das durch die Zuführrutsche 46 dem Krautfänger zugeführte Gemisch fallen. In denjenigen Bereichen der Kreisbahn des Krautfängers, in denen den Reibrädern 62 kein Reibblech 63 bzw. 64 zugeordnet ist, erfolgt kein rotatorischer Antrieb der Walzen 59 bzw. 60, so daß diese dort lediglich translatorisch auf der Kreisbahn der Speichenräder 48 bewegt werden.

Der konstruktive Aufbau der Walzen 59, 60 entspricht dem der Walzen 14 und 24, d. h. sie weisen auch einen durchgehenden, umlaufenden Walzenmantel 67 aus Gummi auf.

Bei diesem Ausführungsbeispiel sind einigen unteren Gruppen 61, über die das Gemisch hinwegbewegt wird, drei mit Abstand voneinander angeordnete Abstreifer 68 in Längsrichtung der Walzen 59 bzw. 60 zugeordnet. Die plattenförmigen Abstreifer 68 sind ebenfalls aufrecht, radial auf die mittige Welle 52 der Speichenräder 48 gerichtet den Walzenmänteln 67 zugeordnet.

In den Speichen 50 des zur Zuführrutsche 46 zugerichteten Speichenrades 48 ist ein sich zur Abführrutsche 47 hin erweiternder Aufgabekonus 69 angeordnet. Dieser leitet das dem Krautfänger zugeführte Gemisch durch die Speichen 50 zuverlässig hindurch auf die Walzen 59 und 60.

Im gezeigten Ausführungsbeispiel weist der Krautfänger annähernd horizontal verlaufende Walzen 59 bzw. 60 auf. Alternativ können die Walzen 59 bzw. 60 mit geneigten Längsachsen angeordnet sein bzw. die gesamte Vorrichtung geneigt angeordnet sein zum schnelleren Transport des Gemisches durch den Krautfänger.

Die Drehfrequenz der durch den Elektromotor 56 angetriebenen Welle 52 beträgt vorzugsweise ungefähr 4 1/min. Eine derartige Drehfrequenz wird vorzugsweise durch Verwendung eines als Getriebemotor ausgebildeten Elektromotors 56 erreicht. Dabei beträgt die Drehfrequenz der auf der Kreisbahn angeordneten Walzen 59, 60 um ihre eigenen Drehachsen ungefähr 60 1/min.

**Patentansprüche**

1. Vorrichtung zum Aussondern von faserigen Gegenständen, insbesondere Kraut od. dgl., aus einem Zuckerrüben aufweisenden Gemisch, mit Gruppen (15, 61) aus zwei in gegensinnigen Drehrichtungen antreibbaren Walzen (14, 24; 59 60), die achsparallel mit aneinanderliegenden bzw. geringfügigen Abstand aufweisenden Walzenmänteln (16, 67) angeordnet sind zum Ausscheiden des Krauts od. dgl. zwischen den Walzen (14, 24; 59, 60) hindurch, dadurch gekennzeichnet, daß die Drehrichtungen der Walzen (14, 24) in Abhängigkeit von deren Antriebsmoment und/oder in (regelmäßigen) Zeitintervallen für eine bestimmte Dauer umkehrbar sind.

2. Vorrichtung nach Anspruch 1, dadurch gekennzeichnet, daß jeder Gruppe (15) ein einzelner Antriebsmotor, insbesondere ein Elektromotor (29), zugeordnet ist.

3. Vorrichtung nach Anspruch 1 und 2, dadurch gekennzeichnet, daß bei Gruppen (15, 61) mit geringfügigen Abstand zueinander aufweisenden Walzenmänteln (16, 67) das Antriebsmoment zwischen zwei Walzen (14, 24; 59, 60) einer Gruppe (15, 61) durch eine getriebliche Verbindung, insbesondere durch zwei miteinander kämmende Zahnräder, übertragbar ist.

4. Vorrichtung nach Anspruch 1, dadurch gekennzeichnet, daß mehrere Reihen (17, 18) aus nebeneinanderliegenden Gruppen (15) aus je zwei mit ihren Drehachsen in Förderrichtung (19) des Gemisches abwärts geneigten Walzen (14, 24) in Förderrichtung (19) hintereinander angeordnet sind.

5. Vorrichtung nach Anspruch 4, dadurch gekennzeichnet, daß die Gruppen (15) bzw. Reihen (17, 18) bei Hintereinanderanordnung zueinander höhenversetzt sind, und zwar in Förderrichtung (19) des Gemisches tieferliegend bei gleichgerichteten Drehachsen der Walzen (14, 24).

6. Vorrichtung nach Anspruch 5, dadurch gekennzeichnet, daß bei mehreren hintereinanderliegenden Reihen (17, 18) aus mehreren Gruppen (15) die in Förderrichtung (19) vorn liegende Reihe (18) eine Gruppe (15) aus zwei nebeneinanderliegenden Walzen (14, 24) mehr aufweist als die dahinter liegende Reihe (17) und die hintereinanderliegenden Reihen (17, 18) um einen Durchmesser einer Walze (14 bzw. 24) versetzt sind.

7. Vorrichtung nach Anspruch 2, dadurch gekennzeichnet, daß durch eine elektrische Steuerung der Elektromotoren (29) von einem Stromwächter (Stromrelais 31) die (Betriebs-) Drehrichtung derselben für ein Zeitinvervall reversierbar ist, insbesondere zum Beseitigen sperriger Gegenstände zwischen den Walzen (14, 24) einer Gruppe (15).

8. Vorrichtung nach Anspruch 1, dadurch gekennzeichnet, daß das Zeitinvervall der Drehung der Elektromotoren (29) in entgegengesetzter (Betriebs-)Drehrichtung an einem Zeitrelais (42) einstellbar ist.

9. Vorrichtung nach Anspruch 7, dadurch gekennzeichnet, daß die Summe der Ströme aller Elektromotoren (29) zum Antrieb der Gruppen (15) einer Reihe (17, 18) oder der gesamten Vorrichtung durch einen Stromwächter, insbesondere ein Zeitrelais (42), fließt.

10. Vorrichtung nach Anspruch 6, dadurch gekennzeichnet, daß unterhalb jeder Reihe (17, 18) nebeneinanderliegender Gruppen (15) wenigstens ein Trichter (22) zur Abführung des zwischen den Walzen (14, 24) hindurchbewegten Krauts od. dgl. und jedem Walzenmantel (16) der Walzen (14, 24) ein aufrechter, plattenförmiger Abstreifer (21) zugeordnet ist.

11. Vorrichtung nach Anspruch 6, dadurch gekennzeichnet, daß den Reihen (17, 18) aus in Gruppen (15) angeordneten Walzen (14, 24) mindestens eine Schikane (Erhöhung 20) vorgeordnet ist zur Auflockerung des aus einem Bunker (10) austretenden, über die Rutsche (11) geförderten Gemisches.

12. Vorrictung nach Anspruch 11, dadurch gekennzeichnet, daß die Schikanen als auf einem Boden (12) der Rutsche (11) über die gesamte Breite derselben querverlaufende Erhöhungen (20) ausgebildet sind, die im Bereich vor den Reihen (17, 18) auf dem Boden (12) angeordnet sind.

13. Vorrichtung nach Anspruch 1, gekennzeichnet durch eine Vielzahl von Gruppen (61) zweier Walzen (59, 60), die längs einer geschlossenen, insbesondere kreisförmigen Bahn angeordnet sind.

14. Vorrichtung nach Anspruch 13, dadurch gekennzeichnet, daß die Walzen (59, 60) an ihren Stirnseiten im Bereich des Umfangs zweier mit Abstand voneinander angeordneter Speichenräder (48) unter Verbindung derselben drehbar gelagert sind.

15. Vorrichtung nach Anspruch 13, dadurch gekennzeichnet, daß die Speichenräder (48) unverdrehbar auf einer mittigen Welle (52) angeordnet sind, die gleichgerichtet mit den Drehachsen der an den Speichenrädern (48) gelagerten Walzen (59, 60) ist, und daß die Welle (52) drehbar an einem (feststehenden) Gerüst (54) gelagert ist.

16. Vorrichtung nach Anspruch 13, dadurch gekennzeichnet, daß die Walzen (59, 60) translatorisch auf einer von den Speichenrädern (48) gebildeten Kreisbahn und/oder rotatorisch um ihre Drehachsen drehbar antreibbar sind.

17. Vorrichtung nach Anspruch 15, dadurch gekennzeichnet, daß die Welle (52) durch einen Motor, vorzugsweise einen Elektromotor (56), drehend antreibbar ist mindestens zur translatorischen Bewegung der Walzen (59, 60) auf der Kreisbahn.

18. Vorrichtung nach Anspruch 17, dadurch gekennzeichnet, daß eine Walze (59) einer jeden Gruppe (61) an einer Stirnseite ein Antriebsrad, insbesondere ein Reibrad (62) aufweist, welches sich bereichsweise mindestens auf einem relativ zu den sich drehenden Speichenrädern (48) stillstehenden Reibblech (63, 64) bei sich drehenden Speichenrädern (48) abwälzt.

19. Vorrichtung nach Anspruch 17, dadurch gekennzeichnet, daß die Walzen (59, 60) in Bereichen zwischen der Drehrichtungsumkehr sich ausschließlich translatorisch auf der Kreisbahn bewegen.

20. Vorrichtung nach Anspruch 17, dadurch gekennzeichnet, daß bei im Uhrzeigersinn angetriebenen Speichenrädern (48) annähernd in der unteren Hälfte der Kreisbahn ein Reibblech (63) von der Außenseite der Kreisbahn her an den Reibrädern (62) anliegt zum Antrieb der Walzen in (Betriebs-)Drehrichtung, im rechten oberen Quadranten der Kreisbahn teilweise ein weiteres Reibblech (64) von der Innenseite der Kreisbahn her an den Reibrädern (62) anliegt zum Antrieb der Walzen in entgegengesetzten Richtung, und die Reibbleche (63, 64) über einen Teil der Kreisbahn verlaufen.

21. Vorrichtung nach Anspruch 20, dadurch gekennzeichnet, daß das Reibblech (64) zur Drehrichtungsumkehr der Walzen (59, 60) im Bereich des Umfangs der Speichenräder (48) verschiebbar ist zur Verstellung des Bereichs der Drehrichtungsumkehr der Walzen (59, 60).

22. Vorrichtung nach Anspruch 19, dadurch gekennzeichnet, daß zumindest den in (Betriebs-)Drehrichtung angetriebenen Walzen (59, 60) wenigstens ein Abstreifer (68) zugeordnet ist.

23. Vorrichtung nach Anspruch 22, dadurch gekennzeichnet, daß im mittleren, unteren Bereich der Kreisbahn mit Abstand voneinander drei annähernd über die gesamte Länge der Walzen (59, 60) verlaufende, rechteckförmige Abstreifer (68) radial gerichtet angeordnet sind, derart, daß eine (lange) Kante der Abstreifer (68) parallel zu den Drehachsen der Walzen (59, 60) verläuft und bei mittig über dem Abstreifer (68) befindlichen Walzen (59, 60) zum Walzenmantel (67) einen (schmalen) Spalt bildet.

## Claims

1. Apparatus for separating fibrous objects, in particular herbage or the like, from a mixture containing sugar-beet, comprising groups (15, 61) of two rollers (14, 24; 59, 60) which can be driven in opposite directions of rotation and are arranged in parallel axes with roller shells (16, 67) bearing against one another or being at a slight distance apart for removing the herbage or the like out through the rollers (14, 24; 59, 60), characterized in that the directions of rotation of the rollers (14, 24) are reversible for a certain duration as a function of their driving torque and/or at (regular) time intervals.

2. Apparatus according to Claim 1, characterized in that an individual drive motor, in particular an electric motor (29), is allocated to each group (15).

3. Apparatus according to Claims 1 and 2, characterized in that, in groups (15, 61) with roller shells (16, 67) at a slight distance from one another, the driving torque between two rollers (14, 24; 59, 60) of a group (15, 61) is transmittable by a geared connection, in particular by two intermeshing gear wheels.

4. Apparatus according to Claim 1, characterized in that a plurality of rows (17, 18) of adjacently located groups (15) of in each case two rollers (14, 24) inclined downwards with their axes of rotation in the conveying direction (19) of the mixture are arranged one behind the other in the conveying direction (19).

5. Apparatus according to Claim 4, characterized in that the groups (15) or rows (17, 18), when arranged one behind the other, are vertically offset relative to one another, and in fact lower lying in the conveying direction (19) of the mixture when the axes of rotation of the rollers (14, 24) are orientated in the same direction.

6. Apparatus according to Claim 5, characterized in that, when a plurality of rows (17, 18) of a plurality of groups (15) are located one behind the other, the row (18) located in front in the conveying direction (19) has one more group (15) of two adjacently located rollers (14, 24) than the row (17) located behind it, and the rows (17, 18) located one behind the other are offset by a diameter of a roller (14 and 24 resp.).

7. Apparatus according to Claim 2, characterized in that, by an electrical control of the electric motors (29) by an automatic current controller (current relay 31), the (operating) direction of rotation of the electric motors is reversible for a time interval, in particular for removing bulky objects between the rollers (14, 24) of a group (15).

8. Apparatus according to Claim 1, characterized in that the time interval of the rotation of the electric motors (29) in the opposite (operating) direction of rotation can be set at a timing relay (42).

9. Apparatus according to Claim 7, characterized in that the sum of the currents of all electric motors (29), for driving the groups (15) of a row (17, 18) or of the entire apparatus, flows through an automatic current controller, in particular a timing relay (42).

10. Apparatus according to Claim 6, characterized in that at least one hopper (22) for removing the herbage or the like moved out through the rollers (14, 24) is allocated beneath each row (17, 18) of adjacently located groups (15), and an upright, plate-shaped stripper (21) is allocated to each roller shell (16) of the rollers (14, 24).

11. Apparatus according to Claim 6, characterized in that, for loosening the mixture discharging from a bunker (10) and conveyed via the shute (11), at least one baffle plate (elevated section 20) is arranged in front of the rows (17, 18) of rollers (14, 24) arranged in groups (15).

12. Apparatus according to Claim 11, characterized in that the baffle plates are designed as elevated sections (20) which run transversely on a base (12) of the shute (11) over the entire width of the same and are arranged on the base (12) in the area in front of the rows (17, 18).

13. Apparatus according to Claim 1, characterized by a plurality of groups (61) of two rollers (59, 60) which are arranged along a closed, in particular circular path.

14. Apparatus according to Claim 13, characterized in that the rollers (59, 60), at their end faces in the area of the periphery of two spoked wheels (48) arranged at a distance from one another, while connecting the latter, are rotatably mounted.

15. Apparatus according to Claim 13, characterized in that the spoked wheels (48) are arranged non-rotatably on a central shaft (52) which is orientated in the same direction as the axes of rotation of the rollers (59, 60) mounted on the spoked wheels (48), and that the shaft (52) is rotatably mounted on a (fixed) frame (54).

16. Apparatus according to Claim 13, characterized in that the rollers (59, 60) can be driven rotatably in a translatory manner on a circular path formed by the spoked wheels (48) and/or in a rotatory manner about their axes of rotation.

17. Apparatus according to Claim 15, characterized in that the shaft (52), at least for the translatory movement of the rollers (59, 60) on the circular path, can be driven in a rotating manner by a motor, preferably an electric motor (56).

18. Apparatus according to Claim 17, characterized in that a roller (59) of each group (61), at one end face, has a drive wheel, in particular a friction wheel (62), which, when the spoked wheels (48) are rotating, rolls in certain areas at least on one friction plate (63, 64) which is stationary relative to the rotating spoked wheels (48).

19. Apparatus according to Claim 17, characterized in that the rollers (59, 60), in areas between the reversal of the direction of rotation, move solely in a translatory manner on the circular path.

20. Apparatus according to Claim 17, characterized in that, when the spoked wheels (48) are driven clockwise, a friction plate (63), approximately in the lower half of the circular path, bears from the outside of the circular path against the friction wheels (62) for driving the rollers in the (operating) direction of rotation, in the right hand upper quadrant of the circular path, a further friction plate (64) partially bears from the inside of the circular path against the friction wheels (62) for driving the rollers in the opposite direction, and the friction plates (63, 64) run over a part of the circular path.

21. Apparatus according to Claim 20, characterized in that the friction plate (64) for reversing the direction of rotation of the rollers (59, 60), is displaceable in the area of the periphery of the spoked wheels (48) for adjusting the area of the reversal of the direction of rotation of the rollers (59, 60).

22. Apparatus according to Claim 19, characterized in that at least one stripper (68) is allocated to at least the rollers (59, 60) driven in the (operating) direction of rotation.

23. Apparatus according to Claim 22, characterized in that, in the central, lower area of the circular path, three rectangular strippers (68), at a distance from one another and running approximately over the entire length of the rollers (59, 60), are arranged in a radially orientated manner in such a way that a (long) edge of the strippers (68) runs parallel to the axes of rotation of the rollers (59, 60) and, when the rollers (59, 60) are located centrally above the stripper (68), forms a (narrow) gap towards the roller shell (67).

**Revendications**

1. Dispositif pour trier des éléments fibreux, notamment de l'herbe ou analogue, à partir d'un mélange contenant des betteraves à sucre, comportant des groupes (15, 61) de deux cylindres (14, 24 ; 59, 60) pouvant être entraînés dans des sens de rotation inverses et qui sont disposés avec leurs axes parallèles et avec des bandages (16, 67) appliqués l'un contre l'autre ou légèrement espacés l'un de l'autre, en vue de la séparation de l'herbe ou analogue entre les cylindres (14, 24 ; 59, 60), caractérisé en ce que les sens de rotation des cylindres (14, 24) peuvent être inversés en fonction de leur couple d'entraînement et/ou à intervalles de temps (réguliers) pendant une durée déterminée.

2. Dispositif selon la revendication 1, caractérisé en ce que chaque groupe (15) est associé à un seul moteur d'entraînement, notamment un moteur électrique (29).

3. Dispositif selon les revendications 1 et 2, caractérisé en ce que, dans des groupes (15, 61) comportant des bandages légèrement espacés l'un de l'autre, le couple d'entraînement entre deux cylindres (14, 24 ; 59, 60) d'un groupe (15, 61) peut être transmis par l'intermédiaire d'une liaison fonctionnelle, notamment par l'intermédiaire de deux roues dentées en prise l'une avec l'autre.

4. Dispositif selon la revendication 1, caractérisé en ce que plusieurs rangées (17, 18) de groupes (15) placés côte à côte et se composant chacun de deux cylindres (14, 24) dont les axes de rotation sont inclinés vers le bas dans la direction de transport (19) du mélange, sont disposées l'une derrière l'autre dans la direction de transport (19).

5. Dispositif selon la revendication 4, caractérisé en ce que les groupes (15) ou les rangées (17, 18) sont décalés mutuellement en hauteur dans le cas d'une disposition l'un derrière l'autre, en étant notamment placés plus bas dans la direction de transport (19) du mélange, les axes de rotation des cylindres (14, 24) étant orientés dans le même sens.

6. Dispositif selon la revendication 5, caractérisé en ce que, dans le cas de rangées (17, 18) de plusieurs groupes (15) placées l'une derrière l'autre, la rangée (18) placée en avant dans la direction de transport (19) comporte un groupe (15), formé de deux cylindres (14, 24) côte à côte, de plus que la rangée (17) placée en arrière, et les rangées (17, 18) placées l'une derrière l'autre sont décalées d'un diamètre de cylindre (14 ou 24).

7. Dispositif selon la revendication 2, caractérisé en ce que, sous l'action d'une commande électrique des moteurs électriques (29) par un contrôleur de courant (relais de contrôle d'intensité 31), leur sens de rotation (de service) est réversible pendant un intervalle de temps, notamment en vue d'éliminer des objets volumineux entre les cylindres (14, 24) d'un groupe (15).

8. Dispositif selon la revendication 1, caractérisé en ce que l'intervalle de temps pendant lequel les moteurs électriques (29) tournent dans un sens opposé au sens de rotation (de service) est réglable au moyen d'un relais de temporisation (42).

9. Dispositif selon la revendication 7, caractérisé en ce que la somme des courants de tous les moteurs électriques (29) servant à entraîner les groupes (15) d'une rangée (17, 18) ou bien de l'ensemble du dispositif passe dans un contrôleur de courant, notamment un relais de temporisation (42).

10. Dispositif selon la revendication 6, caractérisé en ce que, en dessous de chaque rangée (17, 18) de groupes (15) placés côte à côte, il est prévu au moins un entonnoir (22) pour évacuer l'herbe ou analogue qui a passé entre les cylindres (14, 24) et un racleur vertical en forme de plaque (21) est associé à chaque bandage (16) de cylindres (14, 24).

11. Dispositif selon la revendication 6, caractérisé en ce qu'au moins une chicane (saillie 20) est disposée en amont des rangées (17, 18) de cylindres (14, 24) disposés en groupes (15) en vue de la désagrégation du mélange sortant d'une trémie (14) et transportée sur la goulotte (11).

12. Dispositif selon la revendication 11, caractérisé en ce que les chicanes sont agencées sous la forme de saillies (20) disposées transversalement sur un fond (12) de la goulotte (11), s'étendant sur toute sa largeur et placées dans une zone située en avant des rangées (17, 18) sur le fond (12).

13. Dispositif selon la revendication 1, caractérisé par une pluralité de groupes (61) de deux cylindres (59, 60) qui sont disposés le long d'une voie fermée, notamment de forme circulaire.

14. Dispositif selon la revendication 13, caractérisé en ce que les cylindres (59, 60) sont montés tournants sur leurs côtés frontaux, dans une zone de la périphérie de deux roues à rayons (48), espacées l'une de l'autre, en assurant la liaison de ces dernières.

15. Dispositif selon la revendication 13, caractérisé en ce que les roues à rayons (48) sont montées non tournantes sur un arbre central (42), qui est orienté dans le même sens que les axes de rotation des cendres (59, 60) montés sur les roues à rayons (48) et en ce que l'arbre (52) est monté tournant sur un châssis (fixe) (54).

16. Dispositif selon la revendication 13, caractérisé en ce que les cylindres (59, 60) peuvent être entraînés tournants par translation sur une voie circulaire constituée par les roues à rayons (48) et/ou par rotation autour de leurs axes de rotation.

17. Dispositif selon la revendication 15, caractérisé en ce que l'arbre (52) peut être entraîné en rotation par un moteur, de préférence un moteur électrique (56), au moins en vue d'un mouvement de translation des cylindres (52, 60) sur la voie circulaire.

18. Dispositif selon la revendication 17, caractérisé en ce qu'un cylindre (59) de chaque groupe (61) comporte, sur un côté frontal, une roue d'entraînement, notamment une roue à friction (62), qui roule localement au moins sur une tôle de friction (63, 64), immobile par rapport aux roues à rayons rotatives (48), lors d'une rotation des roues à rayons (48).

19. Dispositif selon la revendication 17, caractérisé en ce que les cylindres (59, 60) se déplacent, dans des zones situées entre les inversions des sens de rotation, exclusivement par translation sur la voie circulaire.

20. Dispositif selon la revendication 17, caractérisé en ce que, pour des roues à rayons (48) entraînées dans le sens des aiguilles d'une montre, il est prévu, approximativement dans la moitié inférieure de la voie circulaire, une tôle de friction (63) qui s'applique à partir du côté extérieur de la voie circulaire contre les roues à friction (62) en vue de l'entraînement des cylindres dans le sens de rotation (de service) et en ce que, dans un quadrant supérieur de droite de la voie circulaire, une autre tôle de friction (64) s'applique partiellement à partir du côté intérieur de la voie circulaire contre les roues de friction (62) en vue de l'entraînement des cylindres dans le sens opposé, et les tôles de friction (63, 64) s'étendent sur une partie de la voie circulaire.

21. Dispositif selon la revendication 20, caractérisé en ce que la tôle de friction (64) servant à inverser le sens de rotation des cylindres (59, 60) est déplaçable par translation dans une zone de la périphérie des roues à rayons (48) en vue du déplacement de la zone d'inversion du sens de rotation des cylindres (59, 60).

22. Dispositif selon la revendication 19, caractérisé en ce qu'au moins un racleur (68) est associé au moins aux cylindres (59, 60) entraînés dans le sens de rotation (de service).

23. Dispositif selon la revendication 22, caractérisé en ce qu'il est prévu dans une zone inférieure centrale de la voie circulaire trois racleurs (68) de forme rectangulaire, orientés radialement, espacés l'un de l'autre et s'étendant approximativement sur toute la longueur des cylindres (59, 60), de telle sorte qu'un bord (long) des racleurs (68) soit orienté parallèlement aux axes de rotation des cylindres (59, 60) et que, pour des cylindres (59, 60) situés au milieu et au-dessus du racleur (68), un intervalle (étroit) soit formé avec le bandage de cylindre (67).

Fig. 1

Fig. 2

0 114 665

Fig. 3

Fig. 4

Fig. 5

35  35  35

45

40

38

31

44

44

41  32  33  42

43

0 114 665

Fig. 6

0 114 665

Fig. 7

0 114 665

Fig. 8